# EUROPÄISCHE PATENTSCHRIFT

(11) **EP 1 248 364 B1**
(45) Veröffentlichungstag und Bekanntmachung des Hinweises auf die Patenterteilung: **14.03.2007**
(21) Anmeldenummer: 02006767.4
(22) Anmeldetag: 25.03.2002
(51) Int. Cl.: H04B 1/10, H03G 3/34

(54) **Vorrichtung und Verfahren zur Erfassung und Unterdrückung von Störungen**
Noise detecting and suppression device and method therefor
Dispositif de détection et suppression de bruit et méthode correspondante

(30) Priorität: 02.04.2001 DE 10116358
(43) Veröffentlichungstag der Anmeldung: 09.10.2002
(73) Patentinhaber: Micronas GmbH, 79108 Freiburg i. Br. (DE)
(72) Erfinder: Vierthaler, Matthias, 79108 Freiburg (DE)
(74) Vertreter: Patentanwälte Westphal, Mussgnug & Partner

(56) Entgegenhaltungen:
- EP-A- 0 377 965
- DE-A- 4 244 630
- DE-A- 19 854 073
- US-A- 4 208 547
- US-A- 4 736 163
- US-A- 5 261 004
- US-B1- 6 347 146

## Beschreibung

Die vorliegende Erfindung betrifft eine Vorrichtung und ein Verfahren zur Unterdrückung von Störungen, insbesondere in Impulsform, in einem Signal mit einem bandbreitenbegrenzten Nutzanteil.

Wohl wichtigstes Beispiel eines solchen bandbreitenbegrenzten Signals ist ein Audiosignal. Der Nutzanteil eines solchen Audiosignals liegt im vom menschlichen Gehör wahrnehmbaren Frequenzbereich von ca. 40 bis 16000 Hz, wohingegen Störimpulse, die zusammen mit diesem Nutzanteil auf einer Leitung ausbreitungsfähig sind, Frequenzanteile aufweisen können, die über den hörbaren Frequenzbereich hinausreichen.

Störimpulse in einem solchen Audiosignal können aus einer Vielzahl von Gründen auftreten. Die Funkübertragung eines Signals ist im allgemeinen störungsanfällig, insbesondere können sich elektrische Verbraucher in der Nähe des Empfängers störend bemerkbar machen, wie etwa Zündimpulse eines Kraftfahrzeugmotors im Falle von Audioanwendungen in Kraftfahrzeugen. Auch Fehler oder Unzulänglichkeiten bei der Verarbeitung des Audiosignals selbst, z.B. durch Clipping eines digitalisierten Signals oder Überlauf eines digitalen Demodulators, können zu Impulsstörungen führen.

Es besteht ein naheliegendes Bedürfnis, derartige Störungen unterdrücken und die ursprüngliche Form des Signals möglichst originalgetreu oder zumindest in einer Form wiederherstellen zu können, in der für einen Hörer eines solchen Audiosignals so wenig wie möglich wahrnehmbar ist, dass eine Störungsunterdrückung stattgefunden hat. Um eine solche Störungsunterdrückung effizient durchführen zu können, ist es zunächst notwendig, das Auftreten von Störungen zuverlässig zu erfassen. Zum Erfassen und Entfernen von Störkomponenten in einem Signal sind diverse Techniken vorgeschlagen worden.

Eine in US-A-5 479 440 beschriebene Technik beruht in der Transformation von Zeitdaten des zu entstörenden Signals in den Frequenzbereich, der Festlegung einer Schwelle, unterhalb derer alle Frequenzkomponenten gelöscht werden, und dem Zurücktransformieren des so erhaltenen Spektrums in den Zeitbereich. Diese Technik erfordert eine zweifache schnelle Fouriertransformation und ist daher sehr aufwendig und kostspielig und für den Einsatz in Geräten, die für breite Käuferschichten bestimmt sind, kaum geeignet.

Aus US-A-4 622 520 ist ein Verfahren zum Entstören eines einem hochfrequenten Träger aufmodulierten Audiosignals bekannt. Bei diesem Verfahren wird die Stärke von Signalkomponenten mit der des Trägers verglichen, und Signalkomponenten, die stärker als der Träger sind, werden als Störung aufgefasst und unterdrückt. Dieses Verfahren ist auf Signale im Basisband nicht übertragbar, da dort kein Träger als Bezugsgröße für den Vergleich zur Verfügung steht, und auch seine Anwendung auf digitale Signale ist aufgrund der hierfür benötigten hohen Abtastraten problematisch.

In US-A-4 143 333 wird vorgeschlagen, Störimpulse in einem Audiosignal mit Hilfe eines differenzierenden Filters zu erfassen. Für die Dauer einer Störung wird das Signal ausgetastet. Eine derartige Störungserfassung direkt aus dem Audiosignal ist fehlerträchtig, denn zum einen muss sichergestellt sein, dass ein lauter, hoher Ton im Audiosignal nicht fälschlicherweise als Impulsstörung erfasst wird, andererseits besteht die Gefahr, dass bei einer zu hohen Schwelle für die Störungserfassung Störungen unerfasst und damit ungedämpft bleiben.

Weitere Vorrichtungen und Verfahren zur Störungserfassung sind aus EP-A 0 377 965, US-A 4 736 163, DE 198 54 073 A, DE 42 44 630 A, US-A 5 261 004 und US-A 4 208 547 bekannt.

Aufgabe der vorliegenden Erfindung ist, eine Vorrichtung und ein Verfahren zur Unterdrückung von Störungen in einem bandbreitenbegrenzten Signal anzugeben, das einfach und kostengünstig realisierbar ist und dennoch eine hoch zuverlässige Erfassung und Unterdrückung ermöglicht.

Die Aufgabe wird zum einen gelöst durch eine Vorrichtung mit den Merkmalen des Anspruchs 1. Sie wird ferner gelöst durch ein Verfahren mit den Merkmalen des Anspruchs 12.

Der Grenzwert zur Störungserfassung wird zweckmässigerweise von einem Leistungs-Mittelwert des Signals abgeleitet. Dies erlaubt eine automatische Anpassung der Empfindlichkeit der Störungserfassung an den Pegel des Signals.

Der Leistungsmittelwert kann über die Leistung des gesamten Frequenzspektrums des Signals oder auch nur über die Leistung des von ihm abgetrennten spektralen Anteils bestimmt werden.

Die untere Grenzfrequenz eines ersten Filters zur Abtrennung eines außerhalb der Bandbreite des Nutzsignals liegenden spektralen Anteils muss stets über der oberen Grenzfrequenz des bandbreitenbegrenzten Signals liegen. Wenn das bandbreitenbegrenzte Signal ein Audiosignal ist, so hat das erste Filter zweckmässigerweise eine untere Grenzfrequenz, die je nach zugrundeliegender Audionorm im Bereich von 4 bis ca. 24 kHz liegen kann. Die oberen Grenzfrequenzen liegen für Signale von Telefonqualität im Bereich 4 kHz, bei TV-Audiosignalen bei 15 kHz, bei Audio CD bei 22,05 und bei Digital Audio bei 24 kHz; dementsprechend wird man zweckmäßigerweise je nach Art des Audiosignals eine knapp über dessen Grenzfrequenz liegende untere Grenzfrequenz des ersten Filters wählen. Das erste Filter kann insbesondere als Bandpassfilter mit einer oberen Grenzfrequenz im Bereich des 1,5- bis 2-fachen der unteren Grenzfrequenz ausgebildet sein.

Die Vorrichtung zur Störungsunterdrückung in einem bandbreitenbegrenzten Signal umfasst erfindungsgemäß eine Vorrichtung zur Störungserfassung der oben definierten Art sowie ein Entstörfilter mit einer durch das Erfassungsergebnis der Erfassungsvorrichtung steuerbaren Durchlasscharakteristik.

Dabei ist das Entstörfilter im Falle der Nichterfassung einer Störung im wesentlichen vollständig durchlässig.

Wenn eine Störung erfasst wird, nimmt das Entstörfilter zweckmässigerweise eine Tiefpasscharakteristik an. Diese wird im folgenden auch als erste Durchlasscharakteristik bezeichnet, im Gegensatz zur im Fall der Nichterfassung einer Störung verwendeten zweiten Durchlasscharakteristik.

Einer besonders bevorzugten Ausgestaltung der Erfindung zufolge wird die Eckfrequenz der ersten Durchlasscharakteristik oder Tiefpasscharakteristik von einer Steuerschaltung der oberen Grenzfrequenz des Signals nachgeregelt.

Vorzugsweise erfolgt diese Regelung derart, dass die Leistung des tiefpassgefilterten Signals gegen einen vorgegebenen Prozentsatz der Leistung des ungefilterten Signals, zweckmäßigerweise zwischen 50 und 95%, vorzugsweise ca. 85%, konvergiert.

Das Entstörfilter mit der steuerbaren Durchlasscharakteristik kann in einfacher Weise aufgebaut sein aus einem ersten steuerbaren Gewichtungsglied zum Gewichten des Signals mit einem steuerbaren Faktor und parallel zu diesem einer Reihenschaltung eines zweiten steuerbaren Gewichtungsgliedes mit einem zweiten Filter.

Vorzugsweise ist ferner ein Rampengenerator vorgesehen, zum Ansteuern der zwei Gewichtungsglieder mit zwei Gewichtungsfaktoren derart, dass die Summe der zwei Gewichtungsfaktoren konstant ist. Ein solcher Rampengenerator ermöglicht im Falle der Erfassung einer Störung ein progressives, allmähliches und deshalb für einen Zuhörer wenig wahrnehmbares Umschalten zwischen zwei Durchlasscharakteristika des Entstörfilters.

Sinnvollerweise ist zwischen der Störungserfassungsvorrichtung und dem Entstörfilter ein Verzögerungsglied für das Signal vorgesehen, das es ermöglicht, im Falle der Erfassung einer Störung mit dem Übergang von der zweiten auf die erste Durchlasscharakteristik zu beginnen, noch bevor die Störung das Entstörfilter erreicht hat. Zu dem Zeitpunkt, wo die Störung das Entstörfilter durchläuft, sollte selbstverständlich der Übergang zur ersten Durchlasscharakteristik vollständig vollzogen sein. Nach Ende der Störung kann in gleicher Weise progressiv von der ersten auf die zweite Durchlasscharakteristik zurückgeschaltet werden.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: ein stark schematisiertes Blockschaltbild einer erfindungsgemäßen Vorrichtung zur Störungsunterdrückung;
- Fig. 2: ein Blockschaltbild einer ersten Ausgestaltung der Störungserfassungsvorrichtung aus Fig. 1;
- Fig. 3: eine zweite Ausgestaltung der Störungserfassungsvorrichtung;
- Fig. 4: eine erste Ausgestaltung des Entstörfilters der Vorrichtung zur Störungsunterdrückung aus Fig. 1;
- Fig. 5: eine zweite Ausgestaltung des Entstörfilters; und
- Fig. 6: das Ausgangssignal des Rampengenerators aus Fig. 5 im Falle der Erfassung einer Störung.

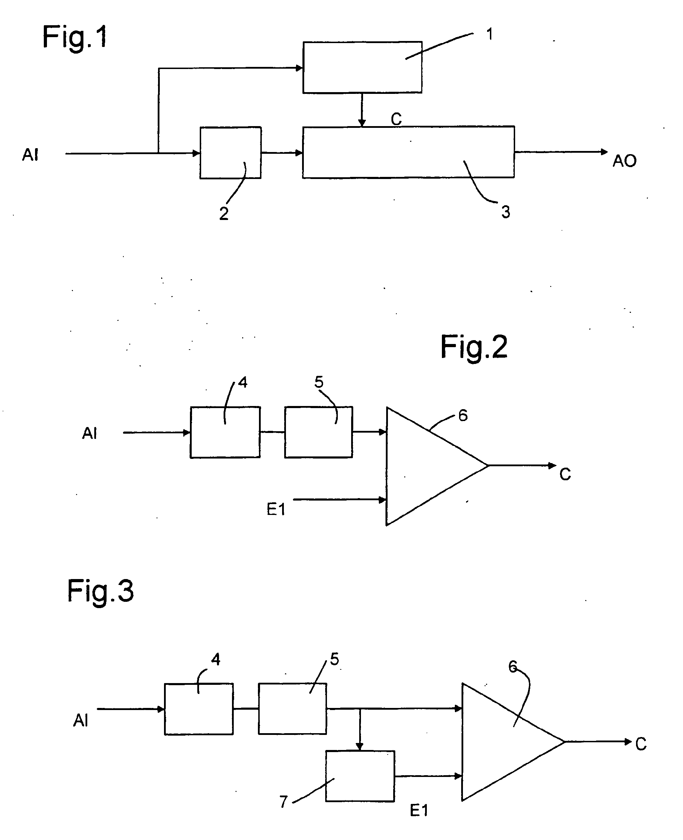

Fig. 1 zeigt ein Blockschaltbild einer Vorrichtung zur Störungsunterdrückung in einem Audiosignal AI. Sie umfasst eine Störungserfassungsvorrichtung 1, die das zu entstörende Signal AI empfängt und ein Ausgangssignal C liefert, welches das Vorhandensein oder Nicht-Vorhandensein einer Störung anzeigt. Ein Verzögerungsglied 2 dient zum Verzögern des zu entstörenden Signals AI, bevor es ein Entstörfilter 3 erreicht. Das Entstörfilter 3 ist durch das Ausgangssignal C der Störungserfassungsvorrichtung 1 gesteuert zwischen zwei Durchlasscharakteristika umschaltbar, von denen die erste eine Tiefpasscharakteristik zum Ausfiltern von impulsartigen Störungen ist und die zweite einem im wesentlichen unveränderten Durchgang des Signals AI durch das Störfilter 3 entsprechen kann.

Ein Blockschaltbild einer ersten, einfachen Ausgestaltung der Störungserfassungsvorrichtung 1 ist in Fig. 2 gezeigt. Die Störungserfassungsvorrichtung umfasst ein Bandpassfilter 4, dessen Eingang das zu entstörende Signal AI zugeführt wird. Die Untere Eckfrequenz des Bandpassfilters 4 liegt oberhalb einer oberen Grenzfrequenz des zu entstörenden Audiosignals AI. Das heißt, wenn die Bandbreite des Audiosignals auf maximal 15 kHz begrenzt ist, so kann die untere Grenzfrequenz des Bandpassfilters 4 bei 17 kHz liegen. Ein geeigneter Wert für eine obere Grenzfrequenz ist 31 kHz.

Wenn das Audiosignal eine impulsartige Störung aufweist, so führt dies dazu, dass sein Spektrum zeitweilig einen signifikanten Leistungsanteil außerhalb der vorgesehenen Nutzsignalbandbreite von hier maximal 15 kHz aufweist. Dieser Störanteil durchläuft das Bandpassfilter 4 und erreicht eine Absolutwertschaltung 5, deren Ausgangssignal proportional zur Leistung des an ihrem Eingang empfangenen Signals ist. Der Ausgang der Absolutwertschaltung 5 ist an einen Eingang eines Komparators 6 angeschlossen, dessen zweitem Eingang ein festes Grenzwertsignal E1 zugeführt wird. Der Komparator 6 liefert als Ausgangssignal das Störungserfassungssignal C, das je nachdem, ob die von der Absolutwertschaltung 5 gemessene Leistung des Störsignalanteiles größer oder kleiner als E1 ist, einen von zwei verschiedenen Werten annimmt.

Der Einfachheit halber kann im Folgenden angenommen werden, dass das Ausgangssignal des Komparators 6 im Falle einer Störung den Wert 1 und sonst den Wert 0 annimmt, wobei sich versteht, dass diese Zuordnung von Zahlenwerten rein willkürlich ist.

Fig. 3 zeigt eine zweite Ausgestaltung der Störungserfassungsvorrichtung. Sie umfasst wie die Ausgestaltung der Fig. 2 ein Bandpassfilter 4, eine Absolutwertschaltung 5 und einen Komparator 6, die hier nicht erneut beschrieben werden. Zusätzlich ist eine Mittelwertschaltung 7 vorgesehen, deren Eingang an den Ausgang der Absolutwertschaltung 5 angeschlossen ist und deren Ausgang mit dem zweiten Eingang des Komparators 6 verbunden ist. Die Mittelwertschaltung erzeugt einen gleitenden Mittelwert des Ausgangssignals der Absolutwertschaltung 5 und liefert diesen, multipliziert mit einem Gewichtungsfaktor N1<1, als Grenzwertsignal E1 an den Komparator 6.

Mit Hilfe der Mittelwertschaltung 7 wird so erreicht, dass der Schwellwert E1 im Laufe der Zeit mit der mittleren Amplitude des vom Bandpassfilter 4 durchgelassenen Störsignalanteiles variiert. Wenn also das Audiosignal nur einen geringen Leistungsanteil außerhalb seiner Nutzbandbreite enthält, so nimmt der Schwellwert E1 im Laufe der Zeit ab, und die Empfindlichkeit der Störungserfassungsvorrichtung steigt; wenn das Audiosignal aber fortwährend reich an hochfrequenten Spektralanteilen ist, die, wenn sie kontinuierlich vorhanden sind, per Definitionem keine Impulsstörungen darstellen können, so wird die Empfindlichkeit der Störungserfassungsvorrichtung automatisch reduziert, um nicht irrtümlich ein intensives, kontinuierliches hochfrequentes Signal als Störung zu erfassen, das z.B. aufgrund einer vorhergehenden digitalen Verarbeitung im Audiosignal AI enthalten sein könnte.

Anstatt mit dem Ausgang der Absolutwertschaltung 5 könnte der Eingang der Mittelwertschaltung 7 auch mit dem Eingang des Bandpassfilters 4 verbunden sein und so einen Mittelwert der Leistung des Audiosignals AI bilden. Bei einer solchen Ausgestaltung würde der Schwellwert E1 der mittleren Leistung des Audiosignals AI folgen, d.h. die Störungserfassung wäre um so empfindlicher, je geringer die Amplitude des Audiosignals AI ist. Bei einem leisen Audiosignal, wo auch Störungen von geringer Amplitude bereits hörbar sind, ist somit eine empfindlichere Erfassung und damit auch eine empfindlichere Unterdrückung möglich als bei einem relativ lauten Signal. Andererseits werden bei einem lauten Signal nur diejenigen Störungen erfasst, die intensiv genug sind, um einen Hörer merklich zu stören.

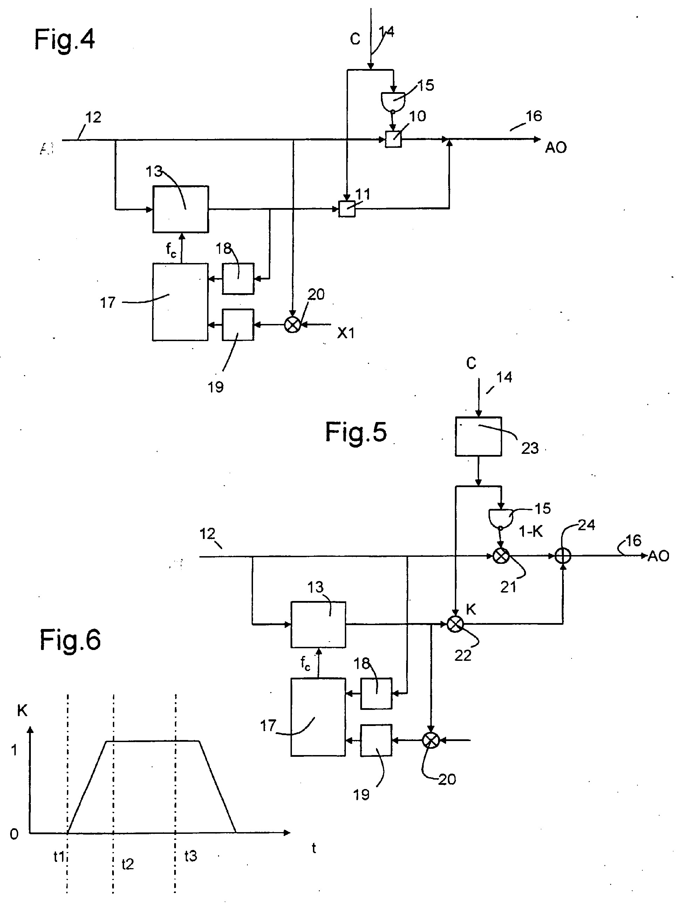

Fig. 4 zeigt eine erste Ausgestaltung des Entstörfilters 3 gemäß der vorliegenden Erfindung. Das Entstörfilter 3 umfasst zwei Schalter 10, 11 von denen der eine 10 direkt mit einem Eingang 12 für das Audiosignal und der andere 11 mit diesem Eingang über ein Tiefpassfilter 13 verbunden ist. Beide Schalter sind durch das über einen Eingang 14 zugeführte Störerfassungssignal C von der Störungserfassungsvorrichtung 1 gesteuert. Einer der Schalter 11 ist mit dem Eingang 14 direkt verbunden, der andere 10 ist mit dem Eingang 14 über einen Inverter 15 verbunden, so dass zu jedem Zeitpunkt einer der zwei Schalter 10, 11 offen und der andere geschlossen ist. In dem Fall, dass keine Störung erfasst wird, ist der Schalter 10 offen, und das Audiosignal durchläuft im wesentlichen unverändert den Schalter 10 und erreicht einen Ausgang 16 des Entstörfilters 3. Wenn eine Störung erfasst wird, so wird der Ausgang des Tiefpassfilters 13 über den Schalter 11 mit dem Ausgang 16 verbunden. Mit anderen Worten beträgt die Durchlässigkeit des Schalters 10 jederzeit entweder K=1 oder K=0, und die des Schalters 11 ist (K-1).

Die Verzögerungszeit des Audiosignals im Verzögerungsglied 2 ist in Abhängigkeit von der Reaktionszeit der Störungserfassungsvorrichtung 1 so gewählt, dass im Falle der Erfassung einer Störung das Störungserfassungssignal C am Eingang 14 seinen Zustand wechselt, noch bevor das gestörte Audiosignal AI am Eingang 12 eintrifft. So ist gewährleistet, dass auch der Beginn einer Störung bereits korrekt gefiltert wird.

Das Tiefpassfilter 13 hat eine Eckfrequenz f_{c}, die durch eine Steuerschaltung 17 vorgebbar ist. Die Steuerschaltung 17 hat zwei Eingänge, an die jeweils die Ausgänge von zwei Absolutwertschaltungen 18, 19 angeschlossen sind. Der Eingang der ersten Absolutwertschaltung 18 ist mit dem Ausgang des Tiefpassfilters 13 verbunden, so dass die erste Absolutwertschaltung 18 als Ausgangssignal einen Pegel liefert, der der Leistung des Ausgangssignals des Tiefpassfilters 13 entspricht. Der Eingang der zweiten Absolutwertschaltung 19 ist über ein Multiplizierglied 20 mit dem Eingang 12 des Entstörfilters 3 verbunden, so dass die zweite Absolutwertschaltung 19 als Ausgangssignal einen Pegel liefert, der Leistung des Ausgangssignals des Tiefpassfilters 13, multipliziert mit einem dem Multiplizierglied 20 zugeführten Faktor X1, entspricht. Der Faktor X1 hat einen fest vorgegebenen Wert, der zweckmäßigerweise im Bereich 0,5 bis 0,9, vorzugsweise bei ca. 0,85, gewählt wird.

Die Steuerschaltung 17 umfasst einen Komparator, der zyklisch einen Vergleich der von den zwei Absolutwertschaltungen 18, 19 gelieferten Pegel durchführt. Wenn der Ausgangspegel der Absolutwertschaltung 19 der höhere ist, so bedeutet dies, dass die Ausgangsleistung des Tiefpassfilters 13 weniger als das X1-fache seiner Eingangsleistung beträgt. In diesem Fall setzt die Steuerschaltung 17 die Eckfrequenz f_{c} um ein vorgegebenes Inkrement d1 herauf, um die Durchlassbandbreite des Tiefpassfilters 13 und damit seine Ausgangsleistung zu vergrößern; wenn der Pegel der Absolutwertschaltung 18 der größere ist, wird die Eckfrequenz f_{c} um das gleiche Inkrement d1 vermindert.

Diese Variabilität der Eckfrequenz f_{c} erlaubt es, wenn das Audiosignal nur geringe hochfrequente Anteile hat und Frequenzanteile einer Impulsstörung, die im oberen hörbaren Bereich des Frequenzspektrums liegen, für einen Zuhörer besonders deutlich wahrnehmbar sind, durch Herabsetzen der Eckfrequenz f_{c} Impulsstörungen sehr wirksam zu unterdrücken und auch Frequenzanteile der Störung im hörbaren Frequenzbereich wirksam zu unterdrücken. Wenn hingegen das Audiosignal starke hochfrequente Anteile aufweist, verschiebt sich die Eckfrequenz f_{c} nach oben, so dass die hochfrequenten Anteile des Audiosignals AI im wesentlichen das Tiefpassfilter 13 durchlaufen und erhalten bleiben. In diesem Fall werden zwar auch in den gleichen Frequenzbereich hineinreichende Spektralanteile der Störung nicht in dem gleichen Maße unterdrückt, wie wenn die Eckfrequenz f_{c} niedriger wäre, dies macht sich jedoch im allgemeinen nicht störend bemerkbar, da diese Spektralanteile vom Audiosignal überdeckt werden.

Eine Weiterentwicklung des Entstörfilters von Fig. 4 ist in Fig. 5 dargestellt. Bereits mit Bezug auf Fig. 4 beschriebene Elemente sind mit gleichen Bezugszeichen bezeichnet und werden nicht erneut beschrieben. Bei dem Entstörfilter der Fig. 5 sind die Schalter durch Gewichtungs- bzw. Multiplizierglieder 21, 22 ersetzt, die über ein Addierglied 24 mit dem Ausgang 16 verbunden sind, der Inverter 15 ist ein analoger Inverter, und zwischen den Eingang 14 für das Störungserfassungssignal C und die Gewichtungsglieder 21, 22 ist ein Rampengenerator 23 geschaltet.

Fig. 6 zeigt den zeitlichen Verlauf des Ausgangssignals K des Rampengenerators 23 im Falle der Erfassung einer Störung. Zum Zeitpunkt t₁ wird der Beginn einer Störung erfasst und das Störungserfassungssignal C am Eingang 14 ändert seinen Pegel. Das Ausgangssignal K des Rampengenerators 23 beginnt, linear von 0 auf 1 anzusteigen. Das heißt, der Gewichtungsfaktor, mit dem das Gewichtungsglied 22 das Ausgangssignal des Tiefpassfilters 13 multipliziert, ändert sich linear mit der Zeit von 0 auf 1, und gleichzeitig geht der vom Gewichtungsglied 21 auf das ungefilterte Audiosignal AI angewendete Gewichtungsfaktor (1-K) von 1 gegen 0. Kurz bevor zum Zeitpunkt t₂ das in dem Verzögerungsglied 2 verzögerte gestörte Audiosignal AI den Eingang 12 erreicht, ist die Umschaltung vollzogen, so dass das gestörte Audiosignal vollständig das Filter 13 durchläuft.

Zum Zeitpunkt t₃ wird keine Störung mehr erfasst, und der Pegel des Störungserfassungssignals C am Eingang 14 ändert sich erneut. Nach einer Zeitspanne, die die Verzögerung des Signals im Verzögerungsglied 2 berücksichtigt, beginnt der Rampengenerator 23, eine von 1 nach 0 abfallende Rampe zu erzeugen, in deren Verlauf die Durchlasscharakteristik des Entstörfilters 3 allmählich von der des Tiefpassfilters 13 zu vollständiger Durchlässigkeit zurückkehrt.

Selbstverständlich ist die Störungserfassungsvorrichtung 1, wie mit Bezug auf Fig.en 2 und 3 beschrieben, auch in Verbindung mit anderen, einfacheren Typen von Entstörfiltern verwendbar. So könnte z.B. bei einer sehr einfachen Ausgestaltung des Entstörfilters das Tiefpassfilter 13 und dessen Steuerschaltung 17 völlig entfallen, und statt dessen könnte der Eingang des Schalters 11 bzw. des Multiplizierers 22 mit Masse verbunden sein, um im Falle einer Störung das gestörte Audiosignal einfach zeitweilig auszutasten. Denkbar wäre auch, den Eingang des Schalters 11 bzw. des Multiplizierers 22 mit dem Ausgang eines Abtast-Haltegliedes zu verbinden, das während des Andauerns der Störung als Ausgangspegel konstant den Momentanwert des Audiosignals liefert, den dieses vor Beginn der Störung hatte. Diese beiden Varianten erlauben die Unterdrückung vereinzelter, punktueller Störungen, wenn jedoch Störungen mehrere Millisekunden andauern oder in schneller Folge auftreten, können diese einfachen Ausgestaltungen zu Aussetzern im Audiosignal führen, die für einen Zuhörer störend sind. Daher sind die anhand der Fig.en 4 und 5 beschriebenen Entstörfilter bevorzugt.

## Patentansprüche

1. Vorrichtung zur Störungsunterdrückung in einem Signal (AI) mit bandbegrenztem Nutzsignalanteil und den Merkmalen:
- eine Vorrichtung zur Störungserfassung (1) mit einem ersten Filter (4) zum Abtrennen eines außerhalb der Bandbreite des Nutzsignals liegenden spektralen Anteils des Signals (AI), und
- einem Komparator (6) zum Vergleichen der Leistung des abgetrennten spektralen Anteils mit einem Grenzwert (E1) und zum Feststellen einer Störung, wenn die Leistung den Grenzwert (E1) übersteigt
- ein Entstörfilter (3) mit einen durch das Erfassungsergebnis steuerbaren Durchlasscharakteristik, **dadurch gekennzeichnet, dass**
- das Entstörfilter (3) ein erstes steuerbares Gewichtungsglied (21) und parallel zu diesem eine Reihenschaltung eines zweiten steuerbaren Gewichtungsgliedes (22) mit einem zweiten Filter (13) aufweist.

2. Vorrichtung nach Anspruch 1, **gekennzeichnet durch** eine Mittelwertschaltung (7) zum Bilden eines von dem Signal (AI) abgeleiteten Leistungs-Mittelwertes und zum Ableiten des Grenzwerts (E1) von dem Leistungs-Mittelwert.

3. Vorrichtung nach Anspruch 2, **dadurch gekennzeichnet, dass** die Mittelwertschaltung (7) mit dem Ausgang des ersten Filters zum Ableiten des Leistungs-Mittelwertes des abgetrennten spektralen Anteils des Signals (AI) verbunden ist.

4. Vorrichtung nach einem der vorhergehenden Ansprüche, **dadurch gekennzeichnet, dass** das erste Filter (4) eine untere Grenzfrequenz im Bereich 4 bis 24 kHz hat.

5. Vorrichtung nach einem der vorhergehenden Ansprüche, **dadurch gekennzeichnet, dass** das erste Filter (4) ein Bandpassfilter ist, dessen obere Grenzfrequenz das 1,5- bis Zweifache der unteren Grenzfrequenz ist.

6. Vorrichtung nach einem der vorhergehenden Ansprüche, **dadurch gekennzeichnet, dass** dem Entstörfilter (3) ein Verzögerungsglied (2) vorgeschaltet ist.

7. Vorrichtung nach einem der vorhergehenden Ansprüche, **dadurch gekennzeichnet, dass** bei Erfassung einer Störung das Entstörfilter (3) eine Tiefpasscharakteristik annimmt.

8. Vorrichtung nach Anspruch 7, **dadurch gekennzeichnet, dass** die Tiefpasscharakteristik eine variable Eckfrequenz (f_{c}) aufweist, und dass eine Steuerschaltung (17) die Eckfrequenz (f_{c}) nach der oberen Grenzfrequenz des Signals (AI) regelt.

9. Vorrichtung nach Anspruch 7 oder 8, **dadurch gekennzeichnet, dass** die Steuerschaltung (17) die Eckfrequenz (f_{c}) so regelt, dass die Leistung des Signals (AI) nach Tiefpassfilterung gegen einen vorgegebenen Prozentsatz (X1) der Leistung des ungefilterten Signals (AI) konvergiert.

10. Vorrichtung nach Anspruch 9, **dadurch gekennzeichnet, dass** der Prozentsatz (X1) zwischen 50 und 95%, vorzugsweise ca. 85% beträgt.

11. Vorrichtung nach einem der vorhergehenden Ansprüche, **gekennzeichnet durch** einen Rampengenerator (23) zum Ansteuern der zwei Gewichtungsglieder (21, 22) mit zwei Gewichtungsfaktoren (K, K-1) derart, dass die Summe der zwei Gewichtungsfaktoren konstant ist.

12. Verfahren zur Störungsunterdrückung in einem Signal (AI) mit bandbegrenztem Nutzsignalanteil mit den Schritten:
- Erfassen einer Störung durch Abtrennen eines außerhalb der Bandbreite des Nutzsignals liegenden spektralen Anteils des Signals (AI)
- Vergleichen der Leistung des abgetrennten spektralen Anteils mit einem Grenzwert (E1);
- Feststellen einer Störung, wenn die Leistung den Grenzwert (E1) übersteigt, und
- Filtern des Signals mit einem Entstörfilter (3) mit einer ersten oder einer zweiten Durchlasscharakteristik, je nachdem, ob eine Störung erfasst wird oder nicht, **dadurch gekennzeichnet, dass** das Entstörfilter (3) ein erstes steuerbares Gewichtungsglied (21) und parallel zu diesem eine Reihenschaltung eines zweiten steuerbaren Gewichtungsgliedes (22) mit einem Filter (13) aufweist.

13. Verfahren nach Anspruch 12, **gekennzeichnet durch** den Schritt des Ableitens des Grenzwerts (E1) von einem Leistungs-Mittelwert des Signals (AI).

14. Verfahren nach Anspruch 13, **dadurch gekennzeichnet, dass** der Leistungs-Mittelwert der Leistungs-Mittelwert des abgetrennten spektralen Anteils ist.

15. Verfahren nach einem der Ansprüche 12 bis 14, **dadurch gekennzeichnet, dass** die erste Durchlasscharakteristik eine Tiefpasscharakteristik ist.

16. Verfahren nach Anspruch 15, **dadurch gekennzeichnet, dass** die Eckfrequenz (f_{c}) der Tiefpasscharakteristik der oberen Grenzfrequenz des Signals (AI) nachgeregelt wird.

17. Verfahren nach Anspruch 15 oder 16, **dadurch gekennzeichnet, dass** die Eckfrequenz (f_{c}) so geregelt wird, dass die Leistung des Signals nach dem Filtern gegen einen vorgegebenen Prozentsatz (X1) der Leistung des Signals (AI) vor dem Filtern konvergiert.

18. Verfahren nach einem der Ansprüche 12 bis 17 **dadurch gekennzeichnet, dass** das Signal (AI) vor dem Filtern verzögert wird.

19. Verfahren nach Anspruch 18, **dadurch gekennzeichnet, dass** im Falle der Erfassung einer Störung progressiv von der zweiten auf die erste Durchlasscharakteristik übergegangen wird.

## Claims

1. Device for noise suppression in a signal (AI) with a band-limited useful signal component and having the features:
- a device for noise detection (1) having a first filter (4) for separating out a spectral component of the signal (AI) lying outside the bandwidth of the useful signal, and
- a comparator (6) for comparing the power of the separated out spectral component with a limit value (E1) and for determining noise if the power exceeds the limit value (E1),
- a suppression filter (3) with a transmission characteristic which is controllable via the detection result,
**characterised in that**
- the suppression filter (3) has a first controllable weighting member (21) and, in parallel therewith, a series connection of a second controllable weighting member (22) with a second filter (13).

2. Device according to claim 1, **characterised by** an averaging circuit (7) for forming a power average value derived from the signal (AI) and for deriving the limit value (E1) from the power average value.

3. Device according to claim 2, **characterised in that** the averaging circuit (7) is connected to the output of the first filter to derive the power average value of the separated out spectral component of the signal (AI).

4. Device according to one of the preceding claims, **characterised in that** the first filter (4) has a lower limit frequency in the range of 4 kHz to 24 kHz.

5. Device according to one of the preceding claims, **characterised in that** the first filter (4) is a bandpass filter whose upper limit frequency is 1.5 times to twice that of the lower limit frequency.

6. Device according to one of the preceding claims, **characterised in that** a delay member (2) is connected upstream of the suppression filter (3).

7. Device according to one of the preceding claims, **characterised in that** on detection of noise, the suppression filter (3) assumes a low-pass characteristic.

8. Device according to claim 7, **characterised in that** the low-pass characteristic has a variable edge frequency (f_{c}), and that a control circuit (17) controls the edge frequency (f_{c}) according to the upper limit frequency of the signal (AI).

9. Device according to claim 7 or 8, **characterised in that** the control circuit (17) controls the edge frequency (f_{c}) such that the power of the signal (AI) after low-pass filtration converges towards a predetermined percentage (X1) of the power of the unfiltered signal (AI).

10. Device according to claim 9, **characterised in that** the percentage (X1) is in the range of 50% to 95%, preferably approximately 85%.

11. Device according to one of the preceding claims, **characterised by** a ramp generator (23) for controlling the two weighting members (21, 22) with two weighting factors (K, K-1) such that the sum of the two weighting factors is constant.

12. Method for noise suppression in a signal (AI) with a band-limited useful signal component, having the steps:
- detecting noise by separating out a spectral component of the signal (AI) lying outside the bandwidth of the useful signal,
- comparing the power of the separated out spectral component with a limit value (E1),
- determining a noise signal if the power exceeds the limit value (E1), and
- filtration of the signal with a suppression filter (3) having a first or a second transmission characteristic, depending on whether a noise signal is detected or not, **characterised in that** the suppression filter (3) has a first controllable weighting member (21) and, parallel therewith, series connection of a second controllable weighting member (22) with a filter (13).

13. Method according to claim 12, **characterised by** the step of deriving the limit value (E1) from a power average value of the signal (AI).

14. Method according to claim 13, **characterised in that** the power average value is the power average value of the separated out spectral component.

15. Method according to one of the claims 12 to 14, **characterised in that** the first transmission characteristic is a low-pass characteristic.

16. Method according to claim 15, **characterised in that** the edge frequency (f_{c}) of the low-pass characteristic is adjusted according to the upper limit frequency of the signal (AI).

17. Method according to claim 15 or 16, **characterised in that** the edge frequency (f_{c}) is controlled so that the power of the signal after filtration converges towards a predetermined percentage (X1) of the power of the signal (AI) before filtration.

18. Method according to one of the claims 12 to 17, **characterised in that** the signal (AI) is delayed before filtration.

19. Method according to claim 18, **characterised in that** in the event of detecting noise a progressive transition is made from the second to the first transmission characteristic.

## Revendications

1. Dispositif pour éliminer les parasites dans un signal (AI) avec une fraction de signal utile à largeur de bande limitée, et dans lequel :
- un dispositif de détection de parasites (1) comprend un premier filtre (4) pour séparer une fraction spectrale du signal (AI) qui se trouve en dehors de la largeur de bande du signal utile,
- un comparateur (6) sert à comparer à une valeur limite (E1) la puissance de la fraction spectrale séparée et à déterminer un parasite si la puissance dépasse la valeur limite (E1),
- un filtre de déparasitage (3) comporte une caractéristique de passage qui peut être commandée par le résultat de la détection,
**caractérisé en ce que**
le filtre de déparasitage (3) présente un premier organe de pondération (21) commandable et, parallèlement à celui-ci, un montage en série d'un second organe de pondération (22) commandable et d'un second filtre (13).

2. Dispositif selon la revendication 1,
**caractérisé en ce qu'**
il comporte un circuit de valeur moyenne (7) pour former une valeur moyenne de puissance déduite du signal (AI) et pour déduire la valeur limite (E1) de la valeur moyenne de puissance.

3. Dispositif selon la revendication 2,
**caractérisé en ce que**
le circuit de valeur moyenne (7) est relié à la sortie du premier filtre pour déduire la valeur moyenne de puissance de la partie spectrale séparée du signal (AI).

4. Dispositif selon une des revendications précédentes,
**caractérisé en ce que**
le premier filtre (4) a une fréquence inférieure dans la plage de 4 à 24 kHz.

5. Dispositif selon une des revendications précédentes,
**caractérisé en ce que**
le premier filtre (4) est un filtre de bande dont la fréquence limite supérieure est de 1, 5 à 2 fois celle de la fréquence limite inférieure.

6. Dispositif selon une des revendications précédentes,
**caractérisé en ce qu'**
en amont du filtre de déparasitage (3) est monté un organe de temporisation (2).

7. Dispositif selon une des revendications précédentes,
**caractérisé en ce que**
pour détecter un parasite, le filtre de déparasitage (3) utilise une caractéristique de passe-bas.

8. Dispositif selon la revendication 7,
**caractérisé en ce que**
la caractéristique de passe-bas présente une fréquence limite (f_{c}), et un circuit de commande (17) règle la fréquence limite (f_{c}) selon la fréquence limite supérieure du signal (AI).

9. Dispositif selon la revendication 7 ou 8,
**caractérisé en ce que**
le circuit de commande (17) règle la fréquence limite (f_{c}) de manière que la puissance du signal (AI), après filtrage passe-bas, converge vers un pourcentage prédéfinie (X1) de la puissance du signal non filtré (AI).

10. Dispositif selon la revendication 9,
**caractérisé en ce que**
le pourcentage (X1) est compris entre 50 et 95 % et atteint de préférence 85 % environ.

11. Dispositif selon une des revendications précédentes,
**caractérisé en ce qu'**
il comporte un générateur à rampe (23) pour commander les deux organes de pondération (21, 22) avec deux facteurs de pondération (K, K-1) de manière que la somme des deux facteurs de pondération reste constante.

12. Procédé pour éliminer un parasite dans un signal (AI) comportant une fraction de signal utile à largeur de bande limitée, qui comprend les étapes suivantes :
- détection d'un parasite par séparation d'une fraction spectrale du signal (AI) se trouvant en dehors de la largeur de bande du signal utile,
- comparaison à une valeur limite (E1), de la puissance de la fraction spectrale séparée,
- détermination d'un parasite si la puissance dépasse la valeur limite (E1),
- filtration du signal au moyen d'un filtre de déparasitage (3) présentant une première ou une seconde caractéristique de passage selon qu'un parasite est détecté ou non,
**caractérisé en ce que**
le filtre de déparasitage (3) présente un premier organe de pondération (21) commandable et, en parallèle avec celui-ci, un circuit en série d'un second organe de pondération (22) commandable et d'un filtre (13).

13. Procédé selon la revendication 12,
**caractérisé par**
l'étape de déduction de la valeur limite (E1) à partir de la valeur moyenne de puissance du signal (A1).

14. Procédé selon la revendication 13,
**caractérisé en ce que**
la valeur moyenne de puissance est celle de la fraction spectrale séparée.

15. Procédé selon une des revendications 12 à 14,
**caractérisé en ce que**
la première caractéristique de passage est une caractéristique de passe-bas.

16. Procédé selon la revendication 15,
**caractérisé en ce que**
la fréquence limite (f_{c}) de la caractéristique de passe-bas est réajustée à la fréquence limite supérieure du signal (AI).

17. Procédé selon la revendication 15 ou 16,
**caractérisé en ce que**
la fréquence limite (f_{c}) est réglée de manière que la puissance du signal après le filtre converge vers un pourcentage prédéfini (X1) de la puissance du signal (AI) avant le filtre.

18. Procédé selon la revendication 12 à 17,
**caractérisé en ce que**
le signal (AI) est temporisé avant le filtre.

19. Procédé selon la revendication 18,
**caractérisé en ce que**
dans le cas où un parasite est détecté, s'effectue progressivement le passage de la seconde à la première caractéristique de passage.
